(19) **Europäisches Patentamt**

**European Patent Office**

**Office européen des brevets**

(11) **EP 0 852 886 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **96938928.7**

(22) Anmeldetag: **09.09.1996**

(51) Int Cl.⁷: **H04Q 7/26**, H04M 1/72

(86) Internationale Anmeldenummer:
**PCT/DE96/01690**

(87) Internationale Veröffentlichungsnummer:
**WO 97/13384 (10.04.1997 Gazette 1997/16)**

(54) **SCHNURLOS-TELEKOMMUNIKATIONSSYSTEM MIT SICHERGESTELLTER INTEROPERABILITÄT VON SCHNURLOS-TELEKOMMUNIKATIONSANWENDUNGEN, INSBESONDERE EINEM GAP-SPEZIFISCHEN DECT-SYSTEM**

CORDLESS TELECOMMUNICATION SYSTEM WITH BACKUP INTEROPERABILITY OF CORDLESS TELECOMMUNICATION APPLICATIONS, IN PARTICULAR OF A GAP-SPECIFIC DECT SYSTEM

SYSTEME DE COMMUNICATION SANS FIL AVEC PRESERVATION DE L'INTEROPERABILITE DES APPLICATIONS SANS FIL, NOTAMMENT SYSTEME DECT/GAP

(84) Benannte Vertragsstaaten:
**ES FR GB IT**

(30) Priorität: **29.09.1995 DE 19536530**

(43) Veröffentlichungstag der Anmeldung:
**15.07.1998 Patentblatt 1998/29**

(73) Patentinhaber: **SIEMENS AKTIENGESELLSCHAFT**
**80333 München (DE)**

(72) Erfinder:
• **BIEDERMANN, Rolf**
**D-48683 Ahaus (DE)**
• **BAUMEISTER, Josef**
**D-46325 Borken (DE)**

(56) Entgegenhaltungen:
**DE-C- 19 536 530**

• **SIEMENS COMPONENTS, Bd. 30, Nr. 5, 6.September 1995, MÜNCHEN, Seiten 32-36, XP000644999 KÜGLE ET AL: "prodect 1.0 software package für dect home phones"**
• **5TH INTERNATIONAL SYMPOSIUM ON PERSONAL INDOOR AND MOBILE RADIO COMMUNICATIONS AND ICCC REGIONAL MEETING ON WIRELESS COMPUTER NETWORKS (PIMRC 94 / WCN), Bd. 4, September 1994, THE HAGUE (NL), Seiten 1064-1069, XP000644985 OLANDERS: "dect standardisation : status and future activities"**
• **ERICSSON REVIEW, Bd. 71, Nr. 2, 1.Januar 1994, STOCKHOLM, Seiten 84-92, XP000460735 CAMPBELL G M ET AL: "DCT 1800 - A DECT SOLUTION FOR RADIO ACCESS APPLICATION"**
• **FUNKSCHAU, Bd. 68, Nr. 13, 7.Juni 1996, MÜNCHEN, Seiten 38-41, XP000597194 PERNSTEINER : "DECT WIRD MIT GAP HERSTELLERUNABHANGIG"**

**Beschreibung**

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen

1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,

2) die Nachrichtenverarbeitung analog oder digital ist,

3) die Nachrichtenübertragung über die Fernübertragungsstrekke auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht

(1) in Form eines Bildes,
(2) als gesprochenes Wort,
(3) als geschriebenes Wort,
(4) als verschlüsseltes Wort oder Bild

übertragen werden. Die Übertragungsarc gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Schnurlos-Telekommunikationssystem mit sichergestellter Interoperabilität von Schnurlos-Telekommunikationsanwendungen, insbesondere einem GAP-spezifischen DECT-System gemäß den Merkmalen des Patentanspruches 1.

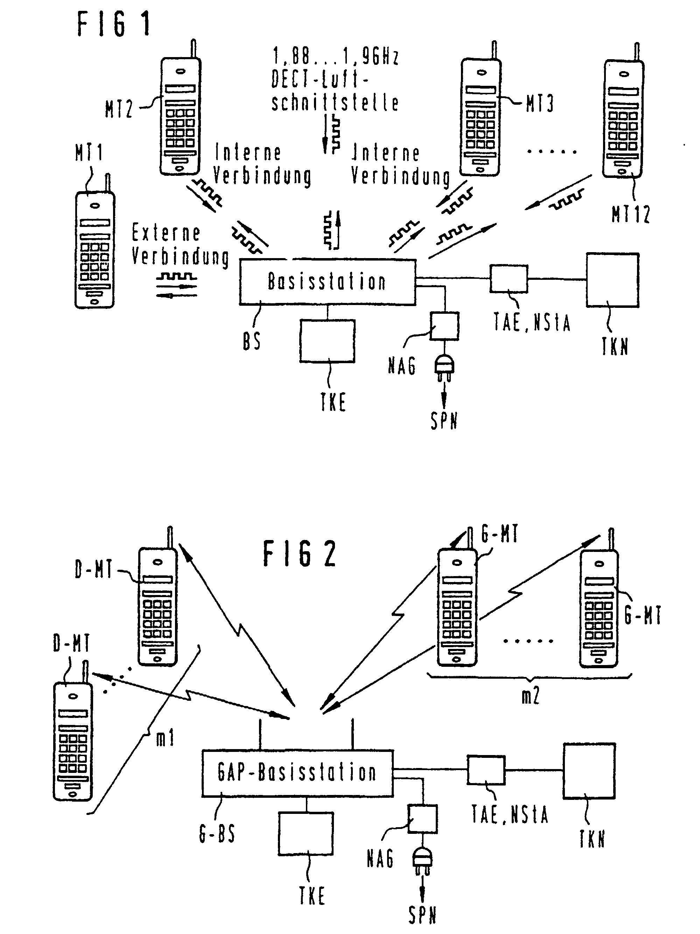

Schnurlos-Telekommunikationssysteme mit sichergestellter Interoperabilität von Schnurlos-Telekommunikationsanwendungen sind DECT-Systeme (**D**igital **E**nhanced (früher: European) **C**ordless **T**elecommunication; vgl. **(1)**: Nachrichtentechnik Elektronik 42 (1992, Jan./Feb.), Nr. 1, Berlin, DE; U. Pilger: "Struktur des DECT-Standards", Seiten 23 bis 29; **(2)**: telcom report 16 (1993), Heft 1, J. H. Koch: "Digitaler Komfort für schnurlose Telekommunikation, DECT-Standard eröffnet neue Nutzungsgebiete", Seiten 26 und 27; **(3)**: Philips Telecommunication Review, Vol. 49, Nr. 3, Sept.1991; R. J. Mulder: "DECT Universal Cordless Access System", Seiten 68 bis 73), für die zur Sicherstellung der Interoperabilität der Schnurlos-Telekommunikationsanwendungen auf der Basis des DECT-Standards ein GAP-Standard (**G**eneric **A**ccess **P**rofile; vgl. ETSI-Publikation prETS 300 444, April 1995, Final Draft, ETSI, FR) definiert und vereinbart worden ist. Nach dem DECT-Standard können gemäß der Darstellung in FIG 1 an einer DECT-Basisstation BS über eine für den Frequenzbereich zwischen 1,88 und 1,90 GHz ausgelegte DECT-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT-Mobilteilen MT1...MT12 aufgebaut werden. Die Zahl 12 ergibt sich aus einer Anzahl k von für den Duplexbetrieb eines DECT-Systems zur Verfügung stehenden Zeitschlitzen bzw. Telekommunikationskanälen (k≤ 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS z.B. über eine Telekommunikationsanschlußeinheit TAE bzw. eine Nebenstellenanlage NStA an ein Telekommunikationsnetz TKN angeschlossen. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom report 16, (1993), Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

Ausgehend von dem einfachen, vorzugsweise für den privaten Bereich verwendeten DECT-System nach Figur 1 sind nun DECT-Systemanwendungen, z. B. im öffentlichen Kleinbereich, vorstellbar, bei denen eine Anzahl m von Mobilteilen mit m > k über die DECT-Luftschnittstelle mit einer Basisstation verbunden sind.

Bei den "m" Mobilteilen mit z.B. m=20 kann es sich dabei gemäß PIG 2 beispielsweise um eine Anzahl m1 von DECT-Mobilteilen D-MT und/oder einer Anzahl m2 von GAP-Mobilteilen G-MT handeln, wobei folgende Bedingung gilt:

$$m = m1 + m2, \text{ wobei } m1 \in N_0 \text{ mit } n = 0,1,2,... \text{ und } m,m2 \in$$

$$N_1 \text{ mit } n = 1,2,3,...$$

Tritt bei einem solchen DECT/GAP-System der Fall ein, daß einer GAP-Basisstation G-BS, die z.B. als Antenna Diversity-Basisstation ausgebildet sein kann, der Wunsch eines fernen Telekommunikationsteilnehmers aus dem Telekommunikationsnetz TKN, mit einem der Mobilteile in Telekommunikationsverbindung zu treten, signalisiert wird, so muß die GAP-Basisstation G-BS dieses den ihr zugeordneten Mobilteilen D-MT, G-MT mitteilen. Diese Mitteilung erfolgt beispielsweise dadurch, daß es bei den Mobilteilen D-MT, G-MT klingelt (akustische Anzeige). Alternativ sind auch andere Anzeigeformen möglich (z.B. optische Anzeige).

Nach dem GAP-Standard ist es nicht möglich, daß mehr GAP-Mobilteile G-MT klingeln als Telekommunikationskanäle k über eine GAP-Luftschnittstelle an der GAP-Basisstation G-BS zur Verfügung stehen. Dies ergibt sich daraus, daß nach dem GAP-Standard das Klingeln am GAP-Mobilteil G-MT nur bei einer aufgebauten Verbindung zwischen der GAP-Basisstation G-BS und dem GAP-Mobilteil G-MT über eine im GAP-Standard definierte Meldung veranlaßt wird. Hierbei handelt es sich um ein wesentliches (mandatory) Leistungs- oder Dienstmerkmal (feature) des GAP-Standards, das von allen GAP-Basisstationen G-BS und GAP-Mobilteilen G-MT unterstützt werden muß. Mit diesem Merkmal erfolgt ein mehr oder weniger gleichzeitiges Rufen der einzelnen, der GAP-Basisstation G-BS zugeordneten GAP-Mobilteile G-MT (Quasi-Sammel/Gruppenruf; GAP-Ruf; verbindungsgebundener Ruf). Werden in einem solchen GAP-System mehr GAP-Mobilteile G-MT gerufen als Telekommunikationskanäle k über die GAP-Luftschnittstelle an der GAP-Basisstation G-BS zur Verfügung stehen (m2>k), so ist maximal für die ersten "k" GAP-Mobilteile G-MT ein Telekommunikationskanal an der GAP-Basisstation G-BS frei. Von den übrigen GAP-Mobilteilen G-MT kann keine Verbindung aufgebaut werden, über den ein Klingeln veranlaßt werden kann.

Bei ETSI wird derzeit ein verbindungsloser Sammel/Gruppenruf (Collective/Group-Ringing) definiert, der jedoch nicht konform zum GAP-Standard ist. Das bedeutet, daß ein GAP-Mobilteil an einer Basisstation -z.B. eine DECT-Basisstation, die diesen verbindungslosen Sammel/Gruppenruf nutzt, nicht klingeln wird.

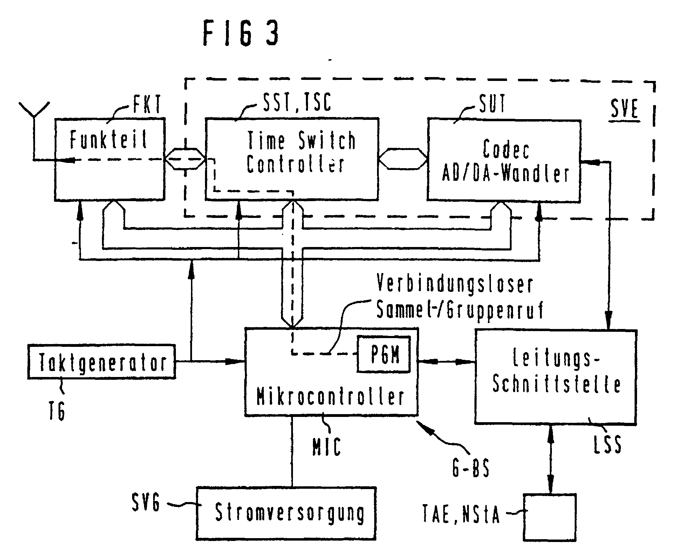

FIG 3 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der GAP-Basisstation G-BS nach FIG 2. Dieser besteht aus einem Funkteil FKT, einer Signalverarbeitungseinrichtung SVE mit einem als Time Switch Controller TSC mit Vermittlungsfunktionen (Switch-Funktionen) ausgebildeten Signalsteuerungsteil SST und einem als CODEC und AD/DA- Wandler ausgebildeten Signalumformungsteil SUT, einem Taktgenerator TG, einem Mikrocontroller MIC, einer Leitungsschnittstelle LSS zur Telekommunikationsanschlußeinheit TAE bzw. zur Nebenstellenanlage NStA und einer Stromversorgung SVG, die in der dargestellten Weise miteinander verbunden sind. In dem Mikrocontroller MIC ist für die Realisierung des verbindungslosen Sammel/Gruppenrufs beispielsweise ein Programmmodul PGM enthalten. Die prinzipielle Funktionsweise des Schaltungsaufbaus in Verbindung mit den Mobilteilen D-MT, G-MT ist mit der eines DECT-Schaltungsaufbaus vergleichbar. Die prinzipielle Funktionsweise des DECT-Schaltungsaufbaus ist beispielsweise in der vorstehend zitierten Druckschrift beschrieben.

Die der Erfindung zugrundeliegende Aufgabe besteht darin, daß in einem Schnurlos-Telekommunikationssystem mit sichergestellter Interoperabilität von Schnurlos-Telekommunikationsanwendungen, insbesondere einem GAP-spezifischen DECT-System (DECT/GAP-System), mit einer Schnurlos-Basisstation und mit der Schnurlos-Basisstation über eine Luftschnittstelle telekommunikationsfähigen, die Anzahl der parallel an der Schnurlos-Basisstation zur Verfügung stehenden Telekommunikationskanäle anzahlmäßig übersteigenden Schnurlos-Mobilteilen ein Sammel-/Gruppenruf möglich ist und dabei die Interoperabilität der Schnurlos-Telekommunikationsanwendungen gewahrt bleibt.

Diese Aufgabe wird durch die im Patentanspruch 1 angegebenen Merkmale gelöst.

Die der Erfindung zugrundeliegende Idee beteht darin, in einem Nachrichten - wie Bilder, gesprochene Wörter, geschriebene Wörter, verschlüsselte Wörter oder Bilder - verarbeitenden und übertragenden Schnurlos-Telekommunikationssystem mit sichergestellter Interoperabilität von Schnurlos-Telekommunikationsanwendungen der eingangs genannten und erläuterten Art - z. B. ein GAP-spezifisches DECT-System (DECT/GAP-System) - einen Mischbetrieb aus einem verbindungsgebundenen Quasi-Sammel/Gruppenruf und einem verbindungslosen Sammel/Gruppenruf zu realisieren. Hierbei wird in der Schnurlos-Basisstation konfiguriert, an welches Schnurlos-Mobilteil ein verbindungsgebundener Quasi-Sammel/Gruppenruf (GAP-Ruf; verbindungsgebundener Ruf) und an welches Schnurlos-Mobilteil ein verbindungsloser Sammel/Gruppenruf (verbindungsloser Ruf) geht. Die Schnurlos-Basisstation weist hierzu entsprechend ausgebildete Mittel zum Steuern von Verbindungen zu den Schnurlos-Mobilteilen auf. Diese Mittel umfassen beispielsweise einem in der Schnurlos-Basisstation vorhandenen Mikroprozessor mit einem für die Rufsteuerung ausgebildeten Programmodul.

Vorteilhafte Weiterbildungen der Erfindung sind in den Unteransprüchen angegeben.

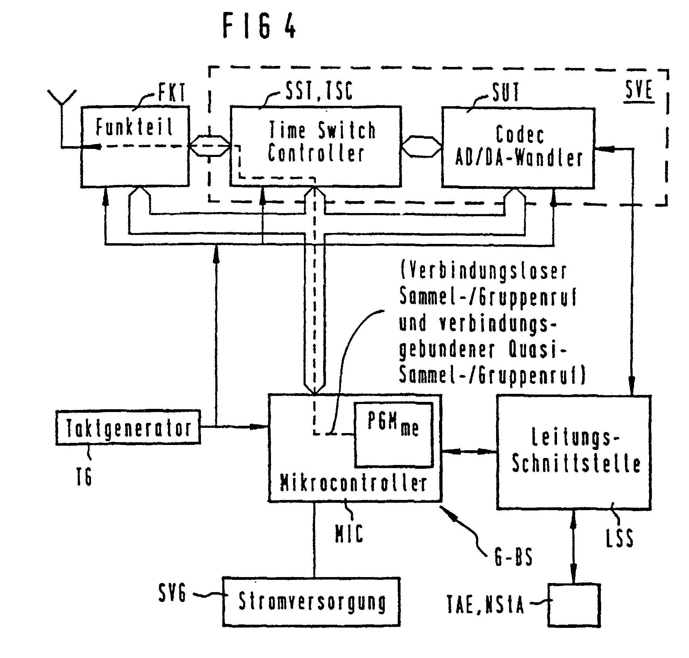

Ein Ausführungsbeispiel der Erfindung wird anhand der FIG 4 erläutert.

FIG 4 zeigt ausgehend von der FIG 3 einen modifizierten Schaltungsaufbau der GAP-Basisstation G-BS nach FIG 2. Mit diesem Schaltungsaufbau der GAP-Basisstation G-BS kann für die der GAP-Basisstation G-BS zugeordneten DECT-Mobilteile D-MT und/oder GAP-Mobilteile G-MT einerseits weiterhin der für die DECT-Mobilteile D-MT bestimmte verbindungslose Sammel/Gruppenruf und andererseits der die GAP-Mobilteile G-MT verbindungsgebundene Quasi-Sammel/Gruppenruf realisiert werden. In dem Mikrocontroller MIC nach FIG 3 ist dazu ein gegenüber dem Programmmodul PGM modifiziertes erweitertes Programmmodul $PGM_{me}$ vorgesehen. Durch dieses Programmmodul $PGM_{me}$ ist festgelegt, an welche der der GAP-Basisstation G-BS zugeordneten Mobilteile D-MT, G-MT ein verbindungsloser Sammel/Gruppenruf bzw. ein verbindungsgebundener Quasi-Sammel/Gruppenruf geht. Mit dem Programmmodul $PGM_{me}$ ist die GAP-Basisstation G-BS für beide Rufmöglichkeiten ausgelegt (Mischbetrieb).

In FIG 2 wurde davon ausgegangen, daß in den Mobilteilen D-MT, G-MT implementierte Erkennungsmittel für die Rufmöglichkeiten der GAP-Basisstation G-BS jeweils nur für die mobilteilspezifische Rufmöglichkeit ausgelegt sind (Monobetrieb). Es ist aber auch möglich, daß z.B. eine Anzahl m3 von DECT/GAP-Mobilteile "D/G-MT" über die GAP-Schnittstelle mit der GAP-Basisstation G-BS durch Telekommunikation verbunden sind. Diese DECT/GAP-Mobilteile "D/G-MT" sind bezüglich der Erkennungsmittel für beide Rufmöglichkeiten ausgelegt (Dualbetrieb; Mischbetrieb). Die mit der Erläuterung zur FIG 2 aufgestllte Bedingung lautet dann:

$$m = m1 + m2 + m3, \text{ wobei } m1, m3 \in N_0 \text{ mit } n = 0,1,2, \text{ ... und}$$

$$m, m2 \in N_1 \text{ mit } n = 1,2,3,...$$

Die Anzahl der Mobilteile G-MT, D/G-MT, die nur den verbindungsgebundenen Quasi-Sammel/Gruppenruf (GAP-Ruf) verstehen, ergibt sich aus der Anzahl "k" der zur Verfügung stehenden Telekommunikationskanäle an der GAP-Basisstation G-BS. Für eine Rufannahme eines Mobilteils D-MT, D/G-MT, das über den verbindungslosen Sammel/Gruppenruf gerufen wurde, muß ein Telekommunikationskanal (Zeitschlitz) der GAP-Basisstation G-BS zur Verfügung stehen. Dabei kann z.B. eine Anzahl "i" der Mobilteile D-MT, D/G-MT über den verbindungslosen Sammel/Gruppenruf gerufen werden. Dadurch, daß mindestens ein Telekommunikationskanal immer für den verbindungslosen Sammel/Gruppenruf reserviert sein muß, ist eine Anzahl "j" der nach dem GAP-Standard gerufenen Mobilteile G-MT, D/G-MT kleiner als die Anzahl der Telekommunikationskanäle (j<k).

**Patentansprüche**

1.    Schnurlos-Telekommunikationssystem mit sichergestellter Interoperabilität von Schnurlos-Telekommunikationsanwendungen, insbesondere einem GAP-spezifischen DECT-System,

(a) mit einer Schnurlos-Basisstation (G-BS) und einer ersten Anzahl "m" von mit der Schnurlos-Basisstation (G-BS) telekommunikationsfähigen, eine zweite Anzahl "k" der parallel an der Schnurlos-Basisstation (G-BS) zur Verfügung stehenden Telekommunikationskanäle anzahlsmäßig übersteigenden (m > k) Schnurolos-Mobilteilen (D-MT, G-MT),

(b) mit einer dritten Anzahl "m1" von auf verbindungslose Rufnachrichten ansprechenden und reagierenden ersten Schnurlos-Mobilteilen (D-MT),

(c) mit einer vierten Anzahl "m2" von auf verbindungsgebundene Rufnachrichten ansprechenden und reagierenden zweiten Schnurlos-Mobilteilen (G-MT),

(d) mit einer fünften Anzahl "m3" von sowohl auf verbindungsgebundene Rufnachrichten als auch auf verbindungslose Rufnachrichten ansprechenden und reagierenden dritten Schnurlos-Mobilteilen,

(e) wobei in der Schnurlos-Basisstation (G-BS) erste Mittel (MIC, $PGM_{me}$) zum Steuern von Verbindungen zu den Schnurlos-Mobilteilen (D-MT, G-MT) vorgesehen sind, die eine Anzahl "j" der verbindungsgebundenen Rufnachrichten und eine Anzahl "i" der verbindungslosen Rufnachrichten senden und

(f) wobei folgende Bedingungen gelten:

$$(1) \qquad m = m1 + m2 + m3, \text{ wobei } m1, m3 \in N_0 \text{ mit } n =$$

$$0,1,2,... \text{ und } m, m2 \in N_1 \text{ mit } n = 1,2,3,...$$

$$(2) \qquad m2 \leq k-1, \text{ wobei } k \in N_2 \text{ mit } n = 2,3,...$$

$$(3) \qquad j < k-1, \text{ wobei } k \in N_2 \text{ mit } n = 2,3,...$$

**2.** Schnurlos-Telekommunikationssystem nach Anspruch 1, **dadurch gekennzeichnet, daß** die Anzahl "k" der parallel an der Schnurlos-Basisstation (G-BS) zur Verfügung stehenden Telekommunikationskanäle gemäß dem DECT/GAP-Standard gleich "12" ist.

**3.** Schnurlos-Telekommunikationssystem nach Anspruch 1, **dadurch gekennzeichnet, daß**
die Anzahl "k" der parallel an der Schnurlos-Basisstation (G-BS) zur Verfügung stehenden Telekommunikationskanäle gemäß dem DECT/GAP-Standard gleich "6" ist.


**Claims**

**1.** Cordless telecommunications system with assured interoperability of cordless telecommunications applications, in particular a GAP-specific DECT system,

(a) having a cordless base station (G-BS) and a first number "m" of cordless mobile parts (D-MT, G-MT) which are capable of telecommunication with the cordless base station(G-BS) and the number of whichexceeds a second number "k" of telecommunications channels (m > k) which are available in parallel at the cordless base station (G-BS),
(b) having a third number "m1" of first cordless mobile parts (D-MT) which respond and react to connectionless call messages,
(c) having a fourth number "m2" of second cordless mobile parts (G-MT) which respond and react to connection-based call messages,
(d) having a fifth number "m3" of third cordless mobile parts which respond and react both to connection-based call messages and to connectionless call messages,
(e) the cordless base station (G-BS) having first means (MIC, $PGM_{me}$) for controlling connections for the cordless mobile parts (D-MT, G-MT), which send a number "j" of connection-based call messages and a number "i" of connectionless call messages, and
(f) the following conditions applying,

$$(1) \qquad m = m1 + m2 + m3, \text{ in which case } m1, m3 \in N_0$$

$$\text{where } n = 0,1,2,... \text{ and } m, m2 \in N_1 \text{ where } n = 1,2,3,...$$

$$(2) \qquad m2 \leq k-1, \text{ in which case } k \in N_2 \text{ where } n = 2,3,...$$

$$(3) \qquad j \leq k-1, \text{ in which case } k \in N_2 \text{ where } n = 2,3,...$$

**2.** Cordless telecommunications system according to Claim 1, **characterized in that** the number "k" of telecommunications channels to the DECT/GAP Standard available in parallel at the cordless base station (G-BS) is equal to "12".

**3.** Cordless telecommunications system according to Claim 1, **characterized in that**
the number "k" of telecommunications channels to the DECT/GAP Standard available in parallel at the cordless base station (G-BS) is equal to "6".

**Revendications**

**1.** Système de télécommunication sans fil avec préservation de l'interopérabilité des applications de télécommunication sans fil, notamment système de DECT/GAP,

a) avec une station de base sans fil (G-BS) et un premier nombre « m » de pièces mobiles sans fil (D-MT, G-MT) aptes à la télécommunication avec la station de base sans fil (G-BS), ledit nombre « m ». excédant un nombre « k » (m>k) de canaux de télécommunications disponibles en parallèle à la station de base sans fil (G-BS),
b) avec un troisième nombre « m1 » de premières pièces mobiles sans fil (D-MT) répondant et réagissant aux messages téléphoniques hors connexion,
c) avec un quatrième nombre « m2 » de deuxièmes pièces mobiles sans fil (G-MT) répondant et réagissant aux messages téléphoniques en connexion,
d) avec un cinquième nombre « m3 » de troisièmes pièces mobiles sans fil répondant et réagissant aussi bien aux messages téléphoniques en connexion qu'aux messages téléphoniques hors connexion,
e) des premiers moyens (MIC, $PGM_{me}$) étant prévus dans la station de base sans fil (G-BS) pour la commande des connexions vers les pièces mobiles sans fil (D-MT, G-MT), qui envoient un nombre « j » de messages téléphoniques en connexion et un nombre « i » de messages téléphoniques hors connexion et
f) les conditions suivantes s'appliquant :

(1)    $m = m1+m2+m3$, où $m1, m3 \in N_0$ avec n = 0, 1, 2,... et $m, m2 \in N_1$ avec n = 1, 2, 3, ...

(2)    $m2 \leq k-1$ où $k \in N_2$ avec n = 2, 3, ...

(3)    $j \leq k-1$ où $k \in N_2$ avec n = 2, 3, ....

**2.** Système de télécommunication sans fil selon la revendication 1, **caractérisé en ce que** le nombre « k » des canaux de télécommunications disponibles en parallèle à la station de base sans fil (G-BS) est égal à «12 » selon la norme DECT/GAP.

**3.** Système de télécommunication sans fil selon la revendication 1, **caractérisé en ce que** le nombre « k » des canaux de télécommunications disponibles en parallèle à la station de base sans fil (G-BS) est égal à « 6» selon la norme DECT/GAP.

FIG 1

MT2

1,88...1,9GHz
DECT-Luftschnittstelle

MT3

. . . . .

MT1

Interne
Verbindung

Interne
Verbindung

MT12

Externe
Verbindung

Basisstation

BS

TAE,NStA

TKN

TKE

NAG

SPN

FIG 2

D-MT

G-MT

G-MT

D-MT

G-MT

m2

m1

GAP-Basisstation

G-BS

TAE,NStA

TKN

TKE

NAG

SPN

7

# FIG 3

# FIG 4

Funkteil — FKT

Time Switch Controller — SST,TSC

Codec AD/DA-Wandler — SUT

SVE

(Verbindungsloser Sammel-/Gruppenruf und verbindungs- gebundener Quasi- Sammel-/Gruppenruf)

Taktgenerator

TG

PGM$_{me}$

Mikrocontroller

MIC

Leitungs- Schnittstelle

G-BS

LSS

SVG — Stromversorgung

TAE,NStA